# EUROPEAN PATENT APPLICATION

(11) **EP 4 488 979 A1**
(43) Date of publication of application: **08.01.2025**
(21) Application number: 24184570.0
(22) Date of filing: 26.06.2024
(51) Int. Cl.: G08G 1/16, B60W 30/095, B60W 60/00

(54) **HANDLING OF NONCONFORMANT SURROUNDING VEHICLES**

(30) Priority: 04.07.2023 SE 2350832
(71) Applicant: Scania CV AB, 151 87 Södertälje (SE)
(72) Inventor: Heidenreich, Caroline, 125 44 Älvsjö (SE); Andersson, Jonny, 151 68 Södertälje (SE); Khays, Samir, 116 31 Stockholm (SE); Lundin, Elin, 126 39 Hägersten (SE); Skoglund, Caroline, 113 61 Stockholm (SE)
(74) Representative: Scania CV AB

(57) **Abstract**

The present disclosure relates to autonomous driving, and in particular to prediction of driving behavior of other vehicles relevant to motion planning. According to a first aspect, the disclosure relates to a method for autonomously operating a first vehicle. The method comprises obtaining S1 a set of rules for determining expected driving behaviour of a second vehicle relevant for motion planning of the first vehicle, the set of rules including physical rules based on physical limitations of the second vehicle and rules of conduct based on expected conduct of the second vehicle. The method further comprises, upon detecting S2 an activity or property of the second vehicle that is affecting the expected conduct of the second vehicle, adjusting S4 the set of rules to exclude one or more of the rules of conduct, and controlling operation of the first vehicle based on expected driving behaviour of the second vehicle determined using the adjusted set of rules. The disclosure also relates to a corresponding control arrangement and computer program, and to a vehicle comprising the control arrangement.

## Description

### Technical field

The present disclosure relates to autonomous driving, and in particular to prediction of driving behavior of other vehicles relevant to motion planning. The disclosure also relates to a corresponding control arrangement and computer program, and to a vehicle comprising the control arrangement.

### Background

For an autonomous vehicle, it is important to monitor and predict surrounding traffic participants, such as vehicles or pedestrians. Prediction of driving of surrounding vehicles can be performed using traditional kinematic methods and/or learning-based methods. High quality of object predictions is crucial in order to give correct inputs to the motion planner and ensure a safe driving.

Regardless of what prediction algorithm is used, it is important to detect when predictions cannot be relied on anymore because a surrounding vehicle is behaving in a way that cannot be captured by the algorithm. This could for example be a wrong-way driver (driving against the driving direction on a highway), a vehicle that is weaving or zigzagging across the road (possibly because of a drunk driver) or objects that are not supposed to be in a certain environment (for example bicycles on a highway).

Techniques to resolve this have been proposed in prior art. For example patent application US20220379910 A1 proposes to handle non-safe road users by increasing driving distance or to simply try to pass the uncertain object. Another example patent US1 1433922 B1 proposes increasing a safety margin to a predicted trajectory based on an uncertainty metric of the prediction. However, the proposed measures are sometimes too drastic, as it may result in unnecessarily careful driving. Hence, there is need for improved and more refined methods for handling surrounding vehicles with nonconformant driving behaviour.

### Summary

It is an objective of the present disclosure to provide more refined methods for handling surrounding vehicles with nonconformant driving behaviour. In particular it is an objective to provide methods that makes it possible to take into account various types of nonconformant driving behaviour of surrounding vehicles in order to be able to mitigate effects of the nonconformance in appropriate ways depending on the type of nonconformance. These objectives and others are at least partly achieved by the method, control arrangement, and vehicle according to the independent claims, and by the embodiments according to the dependent claims.

According to a first aspect, the disclosure relates to a method for autonomously operating a first vehicle. The method comprises obtaining a set of rules for determining expected driving behaviour of a second vehicle relevant for motion planning of the first vehicle, the set of rules including physical rules based on physical limitations of the second vehicle and rules of conduct based on expected conduct of the second vehicle. The method further comprises, upon detecting an activity or property of the second vehicle that is affecting the expected conduct of the second vehicle, adjusting the set of rules to exclude one or more of the rules of conduct, and controlling operation of the first vehicle based on expected driving behaviour of the second vehicle determined using the adjusted set of rules. By adjusting the rules for determining expected driving behaviour, instead of merely adding a safety margin to any unreliable prediction, a more refined method of handling unpredicted objects is accomplished. This will result is less drastic measures tailored to the situation.

In some embodiments, the detecting comprises detecting absence of an expected activity or property. Hence, if the second vehicle does not perform an expected action, e.g., does not activate a turn signal (i.e., a blinker) before turning, the second vehicle is considered unpredictable and the set of rules for determining expected driving behaviour are adjusted.

In some embodiments, the detecting comprises detecting presence of an unexpected activity or property. Hence, if the second vehicle does not perform an expected action, e.g., activates a turn signal (i.e., a blinker) but does not turn, the second vehicle is considered unpredictable and the set of rules for determining expected driving behaviour are adjusted.

In some embodiments, the detecting comprises detecting a deviation from an expected trajectory. Hence, if the second vehicle is not driving straight e.g., it is weaving or zigzagging across the road, then the second vehicle is considered unpredictable and the set of rules for determining expected driving behaviour are adjusted.

In some embodiments, wherein the method comprises identifying one or more rules of conduct to exclude from the set of rules based on the detected activity or property. For example, if a severe violation of traffic rules is detected, such as not stopping at a red light, or abruptly changing lane forcing other vehicles to rescue the situation, then it may be expected that the second vehicle may violate many other traffic rules as well. Hence, many (or all) traffic rules may be excluded from the set of rules. For less severe violations, the adjustment may be less severe.

In some embodiments, the activity or property comprises one or more of: a speed violation, a violation of lane boundaries, a violation of a driving direction, a predefined vehicle deficiency or property, and other violation of a traffic rule or of another rule of conduct. Hence, various violations of rules of conduct may trigger adjustment of the rules of conduct, preferably rules related to the detected activity or property.

In some embodiments, the detecting comprises feature detection based on data captured by vehicle sensors. Hence, the activity or property of the second vehicle that is affecting the expected conduct of the second vehicle may be detected based on data from vehicle sensors, such as cameras.

In some embodiments, the detecting comprises information received via V2X communication. Hence, the activity or property of the second vehicle that is affecting the expected conduct of the second vehicle may be detected based on data received from the second vehicle or from other road objects.

In some embodiments, the detecting comprises analysis of historic compliance between actual trajectories and expected trajectories calculated based on the set of rules. One way of detecting an unpredictable behaviour affecting the expected conduct of the second vehicle is to check the overlap of the predictions for a certain time period with the actual object movement during the same time period.

In some embodiments, the second vehicle is relevant for motion planning of the first vehicle due to being located within a predetermined distance. Hence, the method may be performed to a second vehicle located in the vicinity of the first vehicle.

In some embodiments, the second vehicle is relevant for motion planning of the first vehicle due to being detectable by the first vehicle. Hence, the method may be performed to a second vehicle detectable by sensors of the first vehicle.

In some embodiments, the second vehicle is relevant for motion planning of the first vehicle based on predetermined criteria. Hence, criteria may be set up to determine which vehicles are relevant to motion planning. The criteria may take various parameters related to the first and/or second vehicles as input, such as position, speed, environmental parameters etc.

In some embodiments, the rules of conduct are based on traffic regulations and/or on rules defining common expectations on driving. Hence, the rules of conduct may both include legal regulations and rules associated with common behaviour of drivers.

In some embodiments, the physical rules are based on one or more of vehicle type, vehicle dimensions, propulsion power, braking capacity, and weight of the second vehicle. Various properties that influences driving behaviour may affect the physical rules.

In some embodiments, the expected driving behaviour comprises an expected trajectory of the second vehicle. To avoid collision between the vehicles it is typically important for the first vehicle to predict the path and speed of the second vehicle.

According to a second aspect, the disclosure relates to a computer program comprising instructions which, when the computer program is executed by a computer, cause the computer to carry out the method according to the first aspect.

According to a third aspect, the disclosure relates to a computer-readable medium comprising instructions which, when executed by a computer, cause the computer to carry out the method according to the first aspect.

According to a fourth aspect, the disclosure relates to a control arrangement configured to perform the method according to the first aspect.

According to a fifth aspect, the disclosure relates to a vehicle comprising the system according to the fourth aspect.

Corresponding effects as for the first aspect can be achieved by the second to fifth aspects.

### Brief description of the drawings

The embodiments disclosed herein are illustrated by way of example, and by not by way of limitation, in the figures of the accompanying drawings. Like reference numerals refer to corresponding parts throughout the drawings, in which:
Fig. 1 illustrates a vehicle where the proposed technique may be implemented.
Figs. 2a and 2b illustrate examples of nonconformant behaviour.
Fig. 3 is a flow chart of an example method according to the first aspect.
Fig. 4 illustrates a control arrangement configured to perform the proposed method.

### Detailed description

An autonomous driving system typically comprises a set of rules that is used to predict behaviour of surrounding objects. The prediction can be done with a combination of traditional kinematic methods and learning-based methods. Kinematic methods can be used to analyse geometric aspects of motion, such as the trajectory, displacement, speed, and acceleration, based on physical properties of the objects. This means that prediction results of the kinematic methods are fairly static during driving, as the physical properties do not change much during driving. Learning based methods can be used to predict expected behaviour of an object based on behavioural rules, herein also referred to as "rules of conduct", describing expected behaviour of the object based on historic behaviour or general expectations. For a vehicle the "rules of conduct" typically represent expected driving behaviour, i.e., how a driver will drive. For example, a driver is expected to follow traffic rules (i.e., legal rules). The driver may also be expected to follow common behavioural rules, such as giving way to other users, also when not required by law. The behavioural rules are needed for an autonomous vehicle to travel smoothly, as an autonomous vehicle only using kinematic methods for handling objects nearby would have to stop as soon as any vehicle is approaching to avoid a collision. Driving based on a combination of kinematic rules and rules of conduct normally work well as long as the fellow road users drive as expected.

However, some road users do not follow the behavioral rules, which makes the prediction uncertain or even invalid. These road users are herein referred to as nonconformant or unpredictable objects. Current techniques for handling unpredictable objects involve keeping a safety distance or simply trying to avoid them. However, this may not always be possible and may also lead to too careful driving. The invention is based on the insight that current prediction methods could be used also for unpredictable objects, provided that the behavioral rules are adjusted to exclude rules that the unpredictable object is not following or is expected not to follow. In other words, rules that are usually incorporated in the predictions should be excluded if (or when) they are not expected to be followed anymore. Stated differently, rules that the first vehicle normally follow, and which are therefore by default part of the set of rules, are excluded when not followed (or expected to be followed). For instance, one might usually expect that a vehicle will follow the speed limit. If it is determined that an object cannot be expected (or trusted) to follow one behavioral rule (for example a speed limit), then this rule is excluded when making the prediction. However, the rest of the rules may still be applied. For example, physical properties would typically remain the same.

In other words, it is herein proposed that behavioural rules used for prediction of behaviour of a surrounding object are adjusted based on observed or otherwise obtained information on behaviour of the object. More specifically, if an object violates the common rules of conduct, such as traffic rules or other expected, conventional traffic conduct, the prediction algorithm is adjusted to match the objects actual conduct, by adjusting a set of rules used for determining an expected driving behaviour of the object. In the following, embodiments of the invention will be described in more detail with reference to the figures.

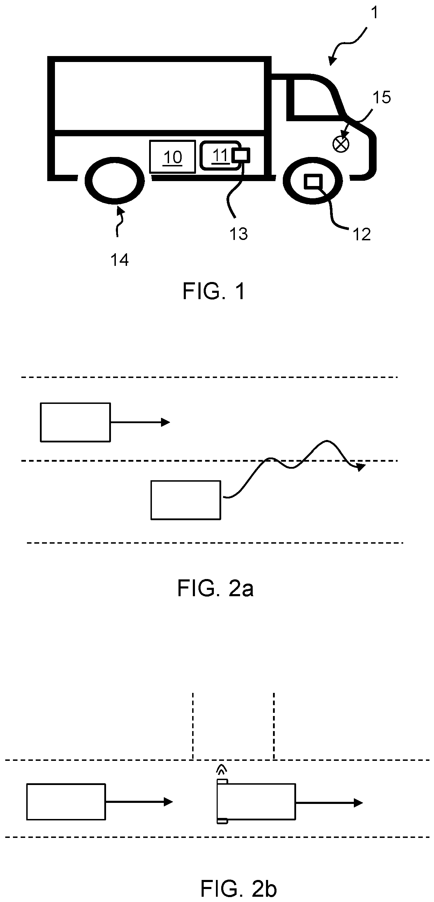

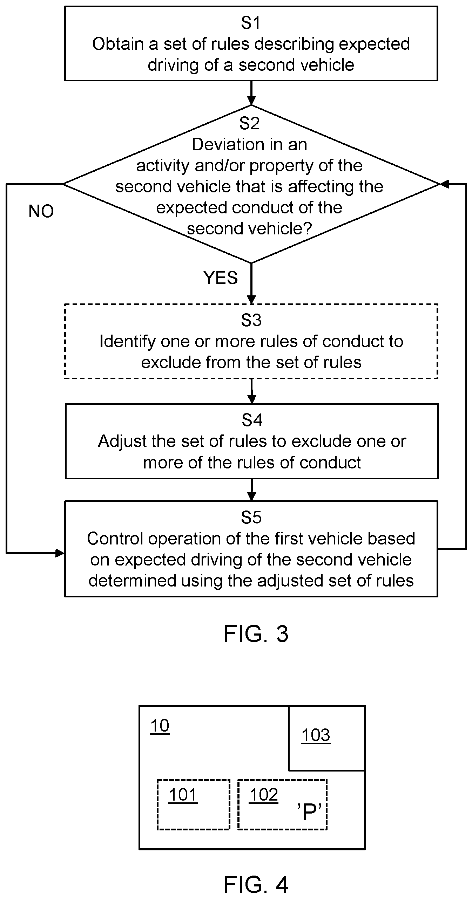

Fig. 1 illustrates a vehicle 1 where the proposed technique may be implemented. The vehicle 1 is or comprises a means for transportation in broad sense and is for example a bus, a truck, or other similar manned or unmanned vehicle. The illustrated vehicle 1, here a truck, comprises a propulsion arrangement 11, primary brakes 12, secondary brakes 13, wheels/tires 14, sensors 15 and a control arrangement 10 (Fig. 4). The propulsion arrangement 11 comprises an engine and a drive train that transfers the motion to the wheels/tires 14 of the vehicle 1. The engine may include one or more of a combustion engine and an electric motor. The vehicle 1 is configured to be autonomously operated. Hence, an autonomous control system of the control arrangement 10 is configured to control the propulsion arrangement 11, primary brakes 12 and secondary brakes 13 to propel and brakes the vehicle 1.

The vehicle 1 also comprises sensors 15 used to monitor different functions and states of the vehicle 1, to provide information to the driver or to different systems of the vehicle 1. The sensors 15 may be located in various locations on the vehicle 1 but are only illustrated in one position in Fig. 1. The sensors 15 may include one or more of: speed sensors, temperature sensors, position sensors, motion sensors, gyros, power sensors pressure sensors, humidity sensors etc. Each sensor 15 converts sensed events or changes of a property into a signal or data that is sent to, or collected by, the control arrangement 10. Such signals or data are, for example, sent over a CAN (Controller Area Network), or similar, of vehicle 1. The plurality of sensors 15 comprises vehicle sensors (such as LIDAR, RADAR and image sensors) for monitoring the surroundings of the vehicle 1. The output from the vehicle sensors 15 may provide input to the autonomous control system of the control arrangement 10, for use in autonomous driving.

For example, the sensors 15 may provide data that enables the autonomous control system to detect other vehicles relevant to motion planning, as well as behavior of such objects.

The proposed technique relates to handling nonconformant objects. An object may be unpredictable due to various reasons. For example, a driver of a vehicle may be careless or inebriated, which may result in unpredictable behaviour. Figs. 2 and 3 illustrate examples of unpredicted behaviour. The vehicle performing motion planning is herein referred to as a first vehicle 1, while the vehicle relevant to the motion planning is referred to as a second vehicle 2.

For example, it is normally expected that a vehicle either stays within one lane or performs a lane change maneuver. If it is detected that a second vehicle 2 travelling in vicinity of the first vehicle 1 is zigzagging between the lanes (Fig. 2a), the second vehicle 2 is considered to have unpredictable steering, or at least lane keeping behavior.

The example in Fig. 2b illustrates a second vehicle 2 that uses its direction indicator (i.e. turn signal) in an unexpected way. The expected way of conduct implies that if a second vehicle 2 is activating a left turn signal, it will subsequently turn left. Hence, a vehicle that activates a left turn signal, but does not turn left, does not behave in accordance with expected conduct.

Fig. 3 illustrates the proposed method for autonomously operating a vehicle 1. The method is for use in the first vehicle which is performing motion planning for the autonomous operation. More specifically, the method is for use in a control arrangement, such as the control arrangement 10 of the vehicle 1 (Fig. 1). The method is performed during autonomous operation (e.g., driving) of the vehicle 1 (Fig. 1). The method may be repeated in an ongoing matter, such as repetitively, or on demand. The method may also be repeated for several different second vehicles 2 relevant to motion planning (e.g., several vehicles in the surroundings all relevant to motion planning). In other words, the method steps S1-S5 may be repeated as often as suitable, feasible or required.

The method may be implemented as computer program comprising instructions which, when the program is executed by a computer (e.g., a processor in the control arrangement 10 (Fig. 4)), cause the computer to carry out the methods. According to some embodiments the computer program is stored in a computer-readable medium (e.g., a memory or a compact disc) that comprises instructions which, when executed by a computer, cause the computer to carry out the method.

During autonomous driving the vehicle 1 has to monitor and consider objects in its surroundings. For example, the vehicle 1 has to consider other road users, such as other vehicles 2 relevant to motion planning, herein referred to as second vehicles 2. The second vehicle 2 is typically a car or a truck, but it could be any moving road object. A second vehicle 2 may be relevant to motion planning due to various reasons. Typically, a second vehicle 2 is relevant to motion planning due to being nearby the first vehicle 1. In other words, in some embodiments, the second vehicle 2 is relevant for motion planning due to being located within a predetermined distance of the first vehicle 1. In practice, all vehicles that the first vehicle 1 is able to detect (i.e. vehicles within field of view of cameras or other sensors) may be considered relevant to motion planning, hence, be considered as second vehicles 2. In other words, in some embodiments, the second vehicle 2 is relevant for motion planning due to being detectable by the first vehicle. Vehicles relevant for motion planning may be defined using predetermined criteria. In other words, in some embodiments, the second vehicle 2 is relevant for motion planning based on predetermined criteria. The criteria may take various parameters as input, such as position, speed, type, weight etc of the second vehicle 2.

The first vehicle 1 uses a set of rules for determining expected driving behaviour of a second vehicle 2. The set of rules are typically predetermined and preconfigured in the first vehicle 1 or received from an external data storage. The set of rules may vary depending on the type of vehicle (e.g. car or truck). In other words, the method comprises obtaining S1 a set of rules for determining expected driving behaviour of a second vehicle 2 relevant for motion planning of the first vehicle 1. The expected driving behaviour of the second vehicle 2 which is predicted using the set of rules can be used for motion planning of the first vehicle 1. Typically, it is desirable to predict the path and speed of the second vehicle 2 in order to avoid collision. In other words, in some embodiments, the determined expected driving behaviour comprises a predicted expected trajectory of the second vehicle.

The expected driving behaviour of the second vehicle 2 is determined S1 (i.e. predicted) based on the physical properties of the second vehicle 2, such as physical dimensions and capability of engine and brakes. The expected driving behaviour is also determined based on how the second vehicle 2 is expected to drive, i.e., expected conduct of vehicles (of this type) in general. In other words, the set of rules used for predicting driving behaviour include physical rules based on physical limitations of the second vehicle and rules of conduct based on expected conduct of the second vehicle. For example, the second vehicle is expected to follow traffic regulations and also to follow common code of conduct for road users. In other words, in some embodiments, the rules of conduct are based on traffic regulations and/or on rules defining common expectations on drivers. The physical rules are in contrast based on physical properties of the second vehicle, which may be obtained using feature detection or via V2X communication. For example, a vehicle type of the second vehicle 2 may be detected using feature detection in images captured by vehicle sensors 15 and relevant data may thereafter be fetched for example from a database. In some embodiments, the physical rules are based on one or more of vehicle type, vehicle dimensions, propulsion power, braking capacity, and weight of the second vehicle.

The method is based on the idea of adjusting the set of rules used for determining expected driving behaviour of a second vehicle 2 when an activity or property of the second vehicle that is affecting the expected conduct of the second vehicle is detected S2. In other words, detection S2 of an activity or property that is affecting the expected conduct of the second vehicle can indicate that the second vehicle in an unpredictable object. In other words, based on the detecting S2 a nonconformant vehicle can be identified. Any type of activity or property that could affect driving behaviour, and not just the propagation itself, can be considered to affecting the expected conduct and may be used to identify a nonconformant vehicle. For example, crazy (i.e. very inconsistent with expected behaviour) blinking or honking are also activities that may be detected. Also properties like open doors, suspected flat tire or a sign indicating driving practice are herein considered properties affecting the expected conduct.

In some embodiments, the detecting S2 comprises detecting absence of an expected activity or property. For example, the second vehicle has not turned on the headlights or has a flat tire. In some embodiments, the detecting S2 comprises detecting presence of an unexpected activity or property. For example, the second vehicle activates a turn signal without turning or has a protruding part or warning sign on. In some embodiments, the detecting S2 comprises detecting a deviation from an expected trajectory. For example, the position of the second vehicle 2 on the road (too far to the left, or wobbling) may be an activity deviating from what is expected. In some embodiments the activity or property comprises a speed violation. For example, the second vehicle 2 drives faster than a legal speed limit of the road, or of the vehicle type. In some embodiments the activity or property comprises a violation of lane boundaries. For example, the second vehicle 2 may cross different types of lines in an unexpected manner. In some embodiments the activity or property comprises a violation of a driving direction. For example, the second vehicle 2 may drive in the wrong direction on a one-way road. In some embodiments the activity or property comprises a predefined vehicle deficiency or property. For example, the second vehicle 2 may have a trailer, a large or heavy load or a warning sign attached to it. In some embodiments the activity or property comprises other violation of a traffic rule or of another rule of conduct. The second vehicle 2 may also have a turning signal activated for too long. Various behaviour which is not aligned with common driving behaviour could be interpreted as an indication that the vehicle is nonconformant and that expected driving behaviour may be affected. Some examples of such behaviour are frequent speeding and braking, strange usage of lights and blinkers, honking etc. The detected property may also involve a misplaced vehicle, such as a bike on a highway.

An activity or property of the second vehicle 2 that is affecting the expected conduct can be detected using various technical means. For example, vehicle sensors 15, such as cameras or lidars, may be used to detect properties of the second vehicle 2. In some embodiments, the detecting S2 comprises feature detection based on data captured by vehicle sensors 15. Various activities and properties, such as blinking, broken lights or propagation in general, may also be detected based on sensor data. Data captured by other objects may also be used to detect the activity or property. For example, the first vehicle 1 may receive information from other vehicles or road objects. In other words, in some embodiments, the detecting S2 comprises information received via V2X communication.

One way of identifying that the second vehicle 2 is an unpredictable object (i.e. a nonconformant vehicle) is to basically evaluate how well past predictions conform with actual driving of the second vehicle 2. For example, one may check the overlap of the historic predictions for a certain time interval with the actual behaviour of the second vehicle 2. The actual behaviour can for example be monitored using vehicle sensors 15 of the first vehicle 2, or by another road user or road object. In other words, in some embodiments, the detecting S2 comprises analysis of historic compliance between actual trajectories and predicted trajectories calculated based on the set of rules. The time interval for such analysis of compliance may comprise recent behaviour (last seconds/minutes) or general behaviour observed during a longer period of time (hours or days).

Upon detecting S2 an activity or property of the second vehicle 2 that is affecting the expected conduct of the second vehicle 2, the rules for determining expected driving behaviour are adjusted, so that some rules that are not expected to be followed by the second vehicle 2 are excluded.

The detected activity or property can be an activity or property that "as such " affects expected conduct of the second vehicle 2. For example, a second vehicle driving through red light would always violate expected conduct. In this case one or more rules associated with the type of activity is excluded from the set of rules. In some embodiments, additional rules related (but not associated) to the activity are also excluded. In some embodiments, this means that if a detected activity or property violate an expected behaviour on which a rule of conduct is based, then this particular rule of conduct is excluded from the set of rules.

In some embodiments, also other similar rules are excluded. For example, if the rule "the second vehicle will not drive through red light" is excluded then the rule "the second vehicle will always stop at a stop sign" could also be excluded, as it may be seen as a similar violation to traffic rules. In this case it may also be anticipated that other traffic rules will also not be followed by the second vehicle. Hence other traffic rules may also be excluded from the rules of conduct for the second vehicle. The definition of which rules that are related is up to implementation. The connection in-between rules may for example be based on statistics showing a likelihood that a driver violating a first rule will violate a second rule as well.

Alternatively, the detected activity or property violate expected conduct due to its quantity or size. More specifically, a detected activity or property may have an expected size or quantity, such as a speed, trajectory, weight etc. For instance, if the detected activity is driving at a certain speed, then one might usually expect that a vehicle will follow the speed limit (or at least stay at around the same speed if already driving above the speed limit). The rules of conduct are based on this expected speed. If the speed is suddenly higher than the expected speed, the rules may be adjusted depending on a size of the deviation is, i.e., depending on how fast the second vehicle is driving. For example, if a speed violation is below 20% then only rules related to the speed are excluded, but if the violation is 20% or more other traffic rules it is interpreted as an indication of careless driving in general which means that other rules are also to be excluded.

Hence, the rules to exclude may depend on the type of activity or property and/or on a quantity or size of (or associated with) the detected activity or property. In other words, in some embodiments, the method comprises identifying S3 one or more rules of conduct to exclude from the set of rules based on the detected activity or property. An option, which is less refined, would be to exclude all the rules of conduct from the set of rules and base the prediction only on physical properties of the second vehicle 2. This may be an option at least for severe violations of expected behaviour, such as if the second vehicle 2 is driving in the wrong direction on a highway.

Once the rules to exclude from the set of rules are identified, the set of rules is adjusted accordingly, as the second vehicle 2 is not expected to follow the identified rules anymore. Stated differently, rules that are usually incorporated in the predictions should not be expected to be followed anymore. In other words, the method comprises adjusting S4 the set of rules to exclude one or more of the rules of conduct. The adjusting may involve completely excluding a rule or adjusting, or replacing, a value with another value. For example, an expected speed may be increased, or decreased.

The rules that are excluded are typically rules that do not apply to the second vehicle anymore, which is identified based on the detected S2 activity or property. Stated differently, the detecting S2 may reveal that some default rules that vehicles in general are expected to follow are not followed by the second vehicle. The set of rules is then adjusted to be tailored to the particular vehicle. In other words, in some embodiments the adjusting S4 comprises excluding behavioral rules that the detected activity or property indicate that the unpredictable object is not following or is expected not to follow. Note that this may not always mean that the second vehicle is careless or is breaking traffic rules. The nonconformance may also be related to other strange habits, such as driving exceptionally slowly or stopping very often.

The first vehicle 1 can then be operated based on the adjusted set of rules. In other words, the method comprises controlling S5 operation of the first vehicle based on expected driving behaviour of the second vehicle 2 determined using the adjusted set of rules. The expected driving is for example used by the motion planner to assure that the first vehicle 1 does not collide with the second vehicle 2.

A possible, though not necessary, extra step might be for the first vehicle 1 to inform a control center (e.g., a control tower) about the detected unpredictable object. A human (or computer) could then assess the situation by looking at e.g., streamed camera data and if necessary, inform authorities or other vehicles. In other words, in some embodiments the method comprises providing information about the detected activity or property to an offboard unit, such as a control center.

Fig. 4 illustrates a control arrangement 10 configured to operate a first vehicle 1. The control arrangement 10 may be arranged in the vehicle 1 (Fig. 1).

The control arrangement 10 comprises control circuitry to perform the method according to any one of the steps, examples or embodiments as described herein. The control arrangement 10 may include one or more Electronic Control Units (ECUs) connected to a controller area network (CAN). For example, the control arrangement 10 may be an Electrical Control Unit, ECU, of the ACC.

More in detail, the control arrangement 10 comprises one, or more, computer(s) 101 and memory 102. The computer 101 comprises any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner. In some embodiments, the computer-readable medium may be a non-transitory computer-readable medium, such as a tangible electronic, magnetic, optical, infrared, electromagnetic, and/or semiconductor system, apparatus, and/or device. The computer-readable memory is for example one or more of the memories in the control arrangement 10. Hence, the proposed method may be implemented as a computer program. The computer program then comprises instructions which, when the computer program is executed by a computer, cause the computer to carry out the method according to any one of the aspects, embodiments or examples as described herein.

In some embodiments the control arrangement 10 comprises a communication interface 103 configured to enable wireless communication with off-board devices, such as with other vehicles, road objects or with a data storage, such as a cloud server. The wireless communication may be performed using any suitable protocol for V2X communication. This communication may be performed via a Controller Area Network, CAN, or directly via an embedded modem.

More specifically, the control arrangement 10 is configured to obtain a set of rules for determining expected driving behaviour of a second vehicle 2 relevant for motion planning of by the first vehicle 1, wherein the set of rules includes physical rules based on physical limitations of the second vehicle and rules of conduct based on expected conduct of the second vehicle.

The control arrangement 10 is also configured to, upon detecting an activity or property of the second vehicle that is affecting expected conduct of the second vehicle 2, adjust the set of rules to exclude one or more of the rules of conduct.

The control arrangement 10 is also configured to control operation of the first vehicle based on expected driving behaviour of the second vehicle 2 determined using the adjusted set of rules.

In further embodiments, the control arrangement is configured to perform the method according to any one of the embodiments described in connection with Fig. 3.

The terminology used in the description of the embodiments as illustrated in the accompanying drawings is not intended to be limiting of the described method, control arrangement or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims.

The present disclosure is not limited to the above-described preferred embodiments. Various alternatives, modifications and equivalents may be used. Therefore, the above embodiments should not be taken as limiting the scope of the disclosure, which is defined by the appending claims.

## Claims

1. A method for autonomously operating a first vehicle (1) comprising:
- obtaining (S1) a set of rules for determining expected driving behaviour of a second vehicle (2) relevant for motion planning of the first vehicle (1), the set of rules including physical rules based on physical limitations of the second vehicle and rules of conduct based on expected conduct of the second vehicle, and
upon detecting (S2) an activity or property of the second vehicle that is affecting the expected conduct of the second vehicle (2),
- adjusting (S4) the set of rules to exclude one or more of the rules of conduct, and
- controlling (S5) operation of the first vehicle based on expected driving behaviour of the second vehicle (2) determined using the adjusted set of rules.

2. The method according to claim 1, wherein the detecting (S2) comprises detecting one or more of:
- absence of an expected activity or property,
- presence of an unexpected activity or property, and
- a deviation from an expected trajectory.

3. The method according to claim 1 or 2, wherein the method comprises:
- identifying (S3) one or more rules of conduct to exclude from the set of rules based on the detected an activity or property.

4. The method according to any one of the preceding claims, wherein the adjusting (S4) comprises excluding behavioral rules that the detected activity or property indicates that the unpredictable object is not following or is expected not to follow.

5. The method according to any one of the preceding claims, wherein the activity or property comprises one or more of:
- a speed violation,
- a violation of lane boundaries,
- a violation of a driving direction,
- a predefined vehicle deficiency or property, and
- other violation of a traffic rule or of another rule of conduct.

6. The method according to any one of the preceding claims, wherein the detecting (S2) comprises one or more of:
- feature detection based on data captured by vehicle sensors,
- analysis of historic compliance between actual trajectories and expected trajectories calculated based on the set of rules, and
- information received via V2X communication.

7. The method according to any one of the preceding claims wherein the second vehicle (2) is relevant for motion planning due to:
- being located within a predetermined distance,
- being detectable by the first vehicle and/or
- based on predetermined criteria.

8. The method according to any one of the preceding claims, wherein the rules of conduct are based on traffic regulations and/or on rules defining common expectations on drivers.

9. The method according to any one of the preceding claims, wherein the physical rules are based on one or more of vehicle type, vehicle dimensions, propulsion power, braking capacity, and weight of the second vehicle.

10. The method according to any one of the preceding claims, wherein the expected driving behaviour comprises an expected trajectory of the second vehicle.

11. A computer program comprising instructions which, when the computer program is executed by a computer, cause the computer to carry out the method according to any one of the preceding claims.

12. A computer-readable medium comprising instructions which, when executed by a computer, cause the computer to carry out the method according to any one of the claims 1 to 10.

13. A control arrangement (10) configured to operate a first vehicle (1), wherein the control arrangement is configured:
- to obtain a set of rules for determining expected driving behaviour of a second vehicle (2) relevant for motion planning of by the first vehicle (1), wherein the set of rules includes physical rules based on physical limitations of the second vehicle and rules of conduct based on expected conduct of the second vehicle, and
- to, upon detecting (S2) an activity or property of the second vehicle that is affecting expected conduct of the second vehicle (2), adjust the set of rules to exclude one or more of the rules of conduct, and
- to control operation of the first vehicle based on expected driving behaviour of the second vehicle (2) determined using the adjusted set of rules.

14. A first vehicle (1) comprising the control arrangement (10) according to claim 13.
